Europäisches Patentamt

European Patent Office

Office européen des brevets

(19)

(11) Publication number: **0 132 302**
A2

(12) **EUROPEAN PATENT APPLICATION**

(21) Application number: **84304209.4**

(22) Date of filing: **21.06.84**

(51) Int. Cl.⁴: **C 08 G 65/26, C 08 G 18/48**

(30) Priority: **26.07.83 US 517197**
**26.07.83 US 517198**

(43) Date of publication of application: **30.01.85**
**Bulletin 85/5**

(84) Designated Contracting States: **BE DE FR GB NL**

(71) Applicant: **TEXACO DEVELOPMENT CORPORATION,**
**2000 Westchester Avenue, White Plains New**
**York 10650 (US)**

(72) Inventor: **Speranza, George Phillip, 2800 Silverleaf,**
**Austin Texas 78761 (US)**
Inventor: **Cuscurida, Michael, 3543 Greystone 1056,**
**Austin Texas 78731 (US)**
Inventor: **Peterson, Bruce William, 8805 North**
**Plaza 2499, Austin Texas 78753 (US)**

(74) Representative: **Brock, Peter William et al, Michael**
**Burnside & Partners 2 Serjeants' Inn Fleet Street,**
**London EC4Y 1HL (GB)**

(54) **Polyether polyols from mixed initiators.**

(57) Polyether polyols suitable for the production of flexible polyurethane foams having improved load-bearing properties are obtained by reacting one of more alkylene oxides with a mixture of initiators comprising

1) 60 to 90 weight % of a trifunctional partially alkoxylated initiator, and

2) 10 to 40 weight % of a secondary partially alkoxylated initiator having an active hydrogen functionality of from 4 to 8.

Preferably, the triol initiator is partially alkoxylated, the higher functional alkoxylated initiator is added, and the resulting mixture is further alkoxylated.

ACTORUM AG

## POLYETHER POLYOLS FROM MIXED INITIATORS AND USE

## THEREOF IN PRODUCING POLYURETHANE FOAM

The invention relates to polyether polyols made by alkoxylating polyfunctional initiators, and more particularly relates to polyether polyols made from alkoxylating a mixture of partially alkoxylated initiators having different numbers of active hydrogens. The invention also relates to the use of these polyether polyols in the production of flexible polyurethane foam.

At present, polyether polyols suitable for use in the production of flexible foams are made by the reaction of trifunctional initiators, such as glycerol, with mixtures of alkylene oxides. Persons skilled in the art of making polyols can add alkylene oxides to polyhydric initiators, such as glycerol, or to an intermediate molecular weight alkylene oxide adduct of the initiator, to prepare products having hydroxyl numbers from 40 to 60. For examples of polyols made by this technique, see US-A-3 393 243; 3 535 307; 3 706 714; 3 847 992; 4 166 172 and 4 316 991.

While generally satisfactory, foams prepared from the prior art polyols are not firm enough for many cushioning applications, particularly at lower foam densities. Conventional means of producing firmer (higher ILD) foams, such as the use of higher functionality initiators, short chain crosslinkers or fillers, lead to other deficiencies in foam properties, such as closed cells, poor tear and elongation properties, and increased foam density. It is, therefore, an object of this invention to increase the functionality of triols and the like by incorporating a minor portion of a higher functionality polyol initiator. Several patents describe mixtures of initiators used to prepare polyols for polyurethane foams. Almost all are concerned with the preparation of polyols for rigid urethane foams. Usually, these processes involve sucrose with water, glycols, glycerol, etc. The use of lower functional polyols permits one to make polyols for rigid urethane foams that are easier to handle and the resulting rigid foams have much finer cells.

A recent example is disclosed in US-A-4 380 502 which employs 80 to 20 weight % of formitol (a mixture of polyhydric alcohols having an average hydroxyl functionality of at least 3) and 20 to 80 weight % of sucrose. The introductory section of this patent is a good summary of the art of mixed initiators.

Also of interest is JP 57-174 313 (see Chemical Abstracts 98: 144401c (1983)). This describes urethane foams having good post-formability by hot pressing, which are prepared by reacting polyisocyanates and polyol mixtures. The polyol mixtures comprise (i) 30 to 90 parts by weight of polyether polyols derived from a 10:90 to 40:60 molar mixture of sucrose and glycerol, respectively, and alkylene oxides having a molecular weight between 4000 and 10,000, and (ii) 10 to 70 parts by weight of polyether diols and/or triols having an average hydroxyl number between 50 and 300. Apparently, sucrose and glycerol are first mixed and then the alkylene oxides are reacted therewith (for example, a 90:10 propylene oxide/ethylene oxide mixture) before a polyether diol is added thereto to give the polyol component for the foams described therein. This method is quite different from the present invention, particularly with regard to the stage at which the various alkoxylations take place.

The present invention concerns a polyether polyol for use in preparing high load bearing flexible urethane foams. The polyol is made by reacting one or more alkylene oxides with a mixture of initiators. The mixture comprises 60 to 90 weight % of a trifunctional partially alkoxylated initiator and 10 to 40 weight % of a secondary partially alkoxylated initiator having an active hydrogen functionality of from 4 to 8. The process for making these polyols involves the unique technique of partially alkoxylating the triol initiator to an intermediate molecular weight and then adding the higher functional alkoxylated initiator. This mixture is then alkoxylated itself.

The present invention also concerns a method for producing flexible polyurethane foam by reacting an organic polyisocyanate with the above described polyether polyols in the presence of a polyurethane formation catalyst.

As noted above, a mixture of initiators is required. The major proportion of the mixture should comprise a trifunctional initiator; that is, a compound having three and only three active hydrogens. This initiator must be partially alkoxylated. Examples of suitable trifunctional initiators are alkylene oxide adducts of glycerol, trimethylolpropane, triethanolamine, 1,2,6-hexane triol, monoethanolamine, diethanolamine, and aminoethylpiperazine. Especially preferred triols are glycerol, trimethylolpropane and triethanolamine. The trifunctional initiator makes up from 60 to 90 weight % of the initiator mixture, based on the total mixture weight.

An unusual feature of the invention is the incorporation of a minor proportion of one other polyhydric initiator, termed a secondary initiator. The word "secondary" does not refer to the functionality of the initiator, but is used to distinguish the initiator present in minor proportions as opposed to the major initiator discussed above. This secondary initiator has 4 to 8 active hydrogens. This initiator is also partially alkoxylated.

Suitable secondary initiators include alkylene oxide adducts of methyl glucoside, ethylenediamine, sorbitol, sucrose, hydroxypropyl glucoside, pentaerythritol, and erythritol. Particularly preferred are methyl glucoside, ethylenediamine, sorbitol and sucrose. The secondary initiator comprises from 10 to 40 weight % of the total initiator mixture.

The alkylene oxide to be added onto the mixed alkoxylated polyhydric initiators may be ethylene oxide, propylene oxide, 1,2-butylene oxide or mixtures thereof. It is especially preferred that the alkylene oxide component is a mixture of ethylene oxide and propylene oxide. These same alkylene oxides are the ones suitable for addition to the initiators before mixing.

The amount of alkylene oxide component to be employed in each initiator will vary. Therefore, the average functionality of the initiator mixture will vary and the amount of alkylene oxide component required to alkoxylate totally the mixture of alkoxylated initiators will also vary. The molecular weight and hydroxyl number of the polyol may be built up by using an excess of alkylene oxide component beyond what is necessary totally to alkoxylate the initiators.

The reaction should preferably be conducted with a catalyst at an elevated temperature of from 75 to 150°C. A well known way of conducting this alkoxylation reaction is to use a catalyst, frequently an alkaline catalyst such as sodium hydroxide or potassium hydroxide. Other catalysts are also known, such as cesium hydroxide, calcium hydroxide, trialkylamines and aqueous ammonia.

The resulting polyols may have a molecular weight of from 1000 to 20,000. It is preferred that the polyols have a molecular weight from 3000 to 10,000, and especially preferred that the molecular weight be from 3000 to 6500. These polyether polyols are particularly suited for the preparation of flexible polyurethane foam. Foams made from these polyols have improved load bearing properties as compared to those made from prior art polyols. Surprisingly, the improved load bearing characteristics of these foams were not achieved at the expense of other important properties.

Examples of foam preparation are presented to demonstrate the utility of the polyether polyols. It is well known that flexible and other types of foams may be made generally by reacting the polyols with polyisocyanates in the presence of a polyurethane formation catalyst, such as a tertiary amine or tin catalyst, optionally in the presence of a blowing agent and other additives. For more details on polyurethane foam preparation see, inter alia, US-A-3 535 307.

The invention is further illustrated by the following Examples.

## EXAMPLE 1

This example will illustrate the preparation of the polyether polyols of this invention.

Into a 31.5 litre reactor were charged 4.08 Kg of a 600 molecular weight ethylene oxide/propylene oxide (EO/PO) adduct of glycerol (alkalinity mg KOH/g 26; hydroxyl number corrected, mg KOH/g 273), and 0.45 Kg of a 480-500 hydroxyl number PO adduct of sorbitol (Atlas G-2410, made by Atlas Minerals and Chemicals Co.). The reactor was then evacuated and purged with nitrogen. Maintaining a nitrogen sweep, the initiators were heated to 105°C. A mixture of 16.98 Kg of PO and 0.64 Kg of EO were then reacted at 105 to 110°C and 0.44 MPa. Propylene oxide (0.68 Kg) was then reacted at 105 to 100°C. After a 2 hour digestion period, water (51 g) was added, and the mixture was stirred for 15 minutes. The alkaline product was then neutralized by stirring for 15 minutes with 127 g of oxalic acid. A synthetic magnesium silicate (106 g) was then charged as an aqueous slurry, and stirred for 2 hours. Di-t-butyl-p-cresol (91.3 g), octylated diphenylamine (13.7 g) and Hyflo Supercel filter aid (150 g) were then added to the neutralized product. The product was then stripped to a minimum pressure at 105 to 110°C, nitrogen-stripped for 30 minutes, and filtered. The finished product had the following properties:

Properties

| | | |
|---|---|---|
| Acid number, mg KOH/g | | 0.007 |
| Hydroxyl number, mg KOH/g | | 61.2 |
| Water, wt.% | | 0.01 |
| Unsaturation, meq/g | | 0.025 |
| pH in 10:6 isopropanol/water | | 7.3 |
| Colour, Pt-Co | | 25 |
| Sodium, ppm | | 0.16 |
| Potassium, ppm | | 0.85 |
| Peroxide, ppm | | 0.90 |
| Viscosity, cs, | at 25°C | 483 |
| | at 38°C | 240 |

## EXAMPLES 2 AND 3

Polyols with a higher sorbitol content were prepared, using the following reaction charges and the procedure of Example 1.

| Example | 2 | 3 |
|---|---|---|
| **Charge** | | |
| 600 mw. PO/EO adduct of glycerol, Kg | 3.63 | 3.18 |
| Atlas G-2410 sorbitol polyol, Kg | 0.91 | 1.36 |
| Propylene oxide, Kg  ) mixed | 21.11 | 21.52 |
| Ethylene oxide, Kg  ) mixed | 0.77 | 0.82 |
| Propylene oxide, Kg | 0.82 | 0.68 |
| Water, g  ) | 45.4 | 50.0 |
| Oxalic acid, g  ) Neutralization step | 113 | 107 |
| Synthetic magnesium) silicate, g  ) | 94.0 | 83.0 |
| Di-t-butyl-p-cresol, g | 109 | 113.8 |
| Octylated diphenylamine, g | 16.3 | 17.1 |
| Hyflo Supercel, g | 100 | 150 |
| **Reaction Details** | | |
| Oxide addition time, h | 5.75 | 6.1 |
| Temperature, $^\circ$C | 105-110 | 110-115 |
| Pressure, MPa | 0.44 | 0.44 |
| **Properties** | | |
| Acid number, mg KOH/g | 0.012 | 0.005 |
| Hydroxyl number, mg KOH/g | 54.8 | 59.0 |
| Unsaturation, meq/g | 0.03 | 0.04 |
| Water, wt.% | 0.01 | 0.01 |
| pH in 10:6 isopropanol/water | 7.4 | 7.5 |
| Colour, Pt-Co | 100 | 40 |
| Sodium, ppm | 0.7 | 4.9 |
| Potassium, ppm | 6.1 | 2.0 |
| Peroxide, ppm | 0.95 | 0.8 |
| Viscosity, cs, at 25$^\circ$C | 547 | 557 |
| at 38$^\circ$C | 274 | 277 |

## EXAMPLE 4

This example will illustrate the preparation of the polyols of this invention, using a sucrose-based polyol as a co-initiator. The polyol was prepared using the procedure of Example 1. Reaction charges, details of preparation and polyol properties are as follows:

Charge
600 molecular weight glycerol EO/PO adduct, Kg ....... 3.63
MULTRANOL M-5034[1], Kg ....... 0.91
Propylene oxide, Kg )              21.11
Ethylene oxide, Kg  ) mixed        0.77
Propylene oxide, Kg                0.82
Water, g           )              45
Oxalic acid, g     ) Neutral-     121
Synthetic magnesium) ization
  silicate, g      ) step          93
Di-t-butyl-p-cresol, g            109
Octylated diphenylamine, g         16.3
Hyflo Supercel, g                 100

Reaction Details
Oxide addition time, h             6.8
Temperature, °C                   110-115
Pressure, MPa                      0.44

Properties
Acid number, mg KOH/g              0.006
Hydroxyl number, mg KOH/g          57.7
Water, wt.%                        0.012
pH in 10:6 isopropanol/water       7.4
Colour, Pt-Co                      75
Sodium, ppm                        0.3
Potassium, ppm                     4.4
Peroxide, ppm                      0.9
Viscosity, cs, at 25°C             534
              at 38°C              263

[1]Neutral sucrose polyol, hydroxyl number 470 mg KOH/g, made
by Mobay Chemical Co.


### EXAMPLE 5

This example will show the use of the polyols of
this invention in the preparation of flexible urethane
foams.  It will further show the higher load bearing properties (ILD) of foams made from these polyols as compared
to those based on prior art polyols.  Additionally, these
higher load bearing properties were not obtained at the
expense of other properties.  All foams were prepared using
a Martin-Sweets foam machine.

| Foam No. | A | B | C | D | E | F |
|---|---|---|---|---|---|---|
| **Formulation, pbw** | | | | | | |
| THANOL F-3016[1] | – | 100 | – | 100 | – | 100 |
| Polyol, Example 1 | 100 | – | – | – | – | – |
| Polyol, Example 2 | – | – | 100 | – | – | – |
| Polyol, Example 3 | – | – | – | – | 100 | – |
| Water | 4.0 | 4.0 | 4.0 | 4.0 | 4.0 | 4.0 |
| Silicone surfactant 7-11[2] | 1.0 | 1.0 | 1.0 | 1.0 | 1.0 | 1.0 |
| T-10 catalyst[3] | 0.4 | 0.4 | 0.4 | 0.4 | 0.4 | 0.4 |
| THANCAT TD-33[4] | 0.3 | 0.3 | 0.3 | 0.3 | 0.3 | 0.3 |
| Toluene diisocyanate (TDI) | 52.96 | 52.1 | 51.9 | 52.1 | 52.62 | 52.1 |
| Isocyanate index | 1.10 | 1.10 | 1.10 | 1.10 | 1.10 | 1.10 |
| **Pour Conditions (Temp $^{O}$C)** | | | | | | |
| Room temp/relative humidity(%) | 24/75 | 24/76 | 24/55 | 22/57 | 25/40 | 24/39 |
| TDI temp/polyol temperature | 22/25 | 22/24 | 19/22 | 20/22 | 22/24 | 21/24 |
| **Properties** | | | | | | |
| Density, Kg/m$^3$ | 24.35 | 24.67 | 25.15 | 24.51 | 24.83 | 24.83 |
| 25% ILD[5], Kg | 22.6 | 19.7 | 24.0 | 19.0 | 25.0 | 21.8 |
| 65% ILD[5], Kg | 41.8 | 37.6 | 44.7 | 35.4 | 46.8 | 38.6 |
| Compression set, (50% deflection) (%) | 6.4 | 6.5 | 11.6 | 4.8 | 4.3 | 2.8 |
| Compression set, (90% deflection) (%) | 7.1 | 6.5 | 17.7 | 5.5 | 7.9 | 3.2 |
| Tensile, MPa | 0.123 | 0.123 | 0.101 | 0.114 | 0.099 | 0.095 |
| Elongation, % | 155 | 167 | 115 | 170 | 103 | 140 |
| Tear, N/m | 4.03 | 4.55 | 2.80 | 3.85 | 2.28 | 3.33 |
| Ball rebound, % | 43 | 47 | 42 | 48 | 48 | 46 |
| Breathability, litre/min | 82.1 | 116.1 | 45.3 | 138.8 | 76.5 | 130.3 |
| **Humid aging (5 hrs at 121$^{O}$C)** | | | | | | |
| Compression set, (50% deflection) (%) | 10.7 | 9.8 | 11.9 | 8.8 | 7.9 | 6.1 |
| CLD loss, (50% deflection), % | 20.6 | 17.7 | 21.2 | 21.8 | 16.9 | 16.0 |

[1] 3,000 molecular weight mixed poly(oxyethyleneoxypropylene) triol made by Texaco Chemical Co., Inc.

[2] Made by Union Carbide Chemical Corp.

[3] 50% stannous octoate in dioctyl phthalate sold by M&T Chemicals.

[4] 33% triethylenediamine in propylene glycol made by Texaco Chemical Co., Inc.

[5] Indentation Load Deflection.

-10-

0132302

It has been found that when an alkoxylated triol, such as glycerol, is mixed with an unalkoxylated polyol, such as pentaerythritol (PE), the mixture of which is later alkoxylated additionally, the polyol which results is unsatisfactory, in that it is hazy, and/or the unalkoxylated or unreacted polyol tends to settle out as solids. This seems to hold true for levels of 0.5 to 10% of PE in the polyol component. The following comparative examples will illustrate this point; namely, that to make a satisfactory polyether polyol of this type, all of the initiators used should be alkoxylated before the initiators are mixed and further alkoxylated to give a stable product.

EXAMPLE 6 (COMPARATIVE)

This example will illustrate the preparation of a polyol using a mixture of a 700 molecular weight propylene oxide adduct of glycerol and unalkoxylated pentaerythritol as the initiators. It will further show that an unstable product was formed as solids came out of solution on storage. This polyol was not acceptable for preparation of flexible foams.

4.54 Kg of a 700 molecular weight propylene oxide adduct of glycerol (alkalinity, mg KOH/g 26.16) were added to the reactor. The reactor was then evacuated and purged with prepurified nitrogen. The initiator was then heated to 110°C and 0.23 Kg of crystalline pentaerythritol was added, and stirred until it went into solution. A mixture of 16.80 Kg of propylene oxide and 3.69 Kg of ethylene oxide was then reacted at 105 to 110°C and 0.44 MPa. Approximately 5 to 6 hours were required for addition of the mixed oxides. The reaction was then terminated by reaction with 0.77 Kg of propylene oxide. The reaction mixture was then digested two hours to an equilibrium pressure and neutralized with 153 g of oxalic acid. Di-t-butyl-p-cresol (51.6 g), octylated diphenylamine (5.2 g) and Hyflo Supercel filter aid (75 g) were then added to the reaction mixture. The neutralized product was then vacuum stripped to a minimum pressure, nitrogen stripped and filtered. The finished product had the following properties:

| | |
|---|---|
| Acid number, mg KOH/g | 0.008 |
| Hydroxyl number, mg KOH/g | 47.4 |
| Water, wt.% | 0.01 |
| Unsaturation, meq/g | 0.03 |
| pH in 10:6 isopropanol/water | 7.3 |
| Colour, Pt-Co | Hazy, could not determine |
| Sodium, ppm | 0.4 |
| Potassium, ppm | 6.2 |
| Peroxide, ppm | 2.0 |

The above product was quite hazy when initially filtered, and solids came out of solution on cooling. The infrared spectra of the solids identified them as unreacted pentaerythritol. Such a product would not be suitable for use in foam manufacture.

### EXAMPLE 7 (COMPARATIVE)

Using the procedure of Example 6, a polyol was prepared using the following reactants:

| | |
|---|---|
| Precatalyzed 700 molecular weight propylene oxide adduct of glycerol Kg | 4.09 |
| Pentaerythritol, Kg | 0.45 |
| Propylene oxide, ) Kg | 16.80 |
| Ethylene oxide, ) Kg | 3.69 |
| Propylene oxide, Kg | 0.77 |
| Oxalic acid, g | 153 |
| Di-t-butyl-p-cresol, g | 51.6 |
| Octylated diphenylamine, g | 5.2 |
| Hyflo Supercel, g | 75 |

The finished product, which had a hydroxyl number of 59.6 mg KOH/g, was hazy after filtration and solids, which were identified as unreacted pentaerythritol, came out of solution on cooling. The finished product had the following properties:

| | |
|---|---|
| Acid number, mg KOH/g | 0.014 |
| Hydroxyl number, mg KOH/g | 59.6 |
| Water, wt.% | 0.01 |
| Unsaturation, meq/g | 0.021 |
| pH in 10:6 isopropanol/water | 6.0 |
| Colour, Pt-Co | Hazy |
| Potassium, ppm | 0.18 |
| Peroxide, ppm | 2.57 |

1. A method for making polyether polyols by reacting one or more alkylene oxides with an initiator having active hydrogen, characterized in that said initiator comprises a mixture of initiators comprising

1) 60 to 90 weight % of a trifunctional partially alkoxylated initiator, and

2) 10 to 40 weight % of a secondary partially alkoxylated initiator having an active hydrogen functionality of from 4 to 8.

2. A method according to Claim 1 characterized in that the alkylene oxide component comprises ethylene oxide, propylene oxide, 1,2-butylene oxide or a mixture thereof.

3. A method according to Claim 1 or 2 characterized in that the alkylene oxide component comprises a mixture of ethylene oxide and propylene oxide.

4. A method according to any of the preceding Claims characterized in that the trifunctional initiator is an alkylene oxide adduct of glycerol, trimethylolpropane or triethanolamine, and in that the secondary initiator is an alkylene oxide adduct of methyl glucoside, ethylenediamine, sorbitol or sucrose.

5. A method according to any of the preceding Claims characterized in that the reaction is conducted in the presence of an alkaline catalyst and at a temperature of from 75 to 150°C.

6. A method according to any of the preceding Claims characterized in that triol initiator is partially alkoxylated, the higher functional alkoxylated initiator is added, and the resulting mixture is further alkoxylated.

7. A method for producing a flexible polyurethane foam by reacting an organic polyisocyanate and a polyol in the presence of a polyurethane-formation catalyst, characterized in that the polyol is a polyether polyol obtainable by a method according to any of the preceding Claims.

8. A method according to Claim 7 characterized in that the polyether polyol has a molecular weight of from 1,000 to 20,000.